# EUROPÄISCHE PATENTSCHRIFT

(11) **EP 0 729 913 B1**
(45) Veröffentlichungstag und Bekanntmachung des Hinweises auf die Patenterteilung: **20.10.1999**
(21) Anmeldenummer: 96103119.2
(22) Anmeldetag: 01.03.1996
(51) Int. Cl.: B66D 3/22, F16D 67/06

(54) **Kettenzug mit auf beide Seiten der Kupplung wirkender Bremse**
Chain hoist with brake actuated clutch
Palan à chaîne muni d'un accoupplement actionné par un frein

(30) Priorität: 02.03.1995 DE 19507190
(43) Veröffentlichungstag der Anmeldung: 04.09.1996
(73) Patentinhaber: R. Stahl Fördertechnik GmbH, 74653 Künzelsau (DE); KCI Konecranes International Plc, 05830 Hyvinkää (FI)
(72) Erfinder: Kuivamäki, Ismo, 01300 Vantaa (FI); Noller, Helmut, 74538 Uttenhofen (DE)
(74) Vertreter: Patentanwälte Rüger, Barthelt & Abel

(56) Entgegenhaltungen:
- DE-A- 4 408 578
- DE-B- 1 045 742
- US-A- 2 947 393
- US-A- 3 016 118

## Beschreibung

In der DE-A-33 30 560 ist ein Elektrokettenzug beschrieben. Dieser Elektrokettenzug enthält in einem Gehäuse einen mit einem zylindrischen Anker versehenen Induktionsmotor, der über eine Rutschkupplung eine Getriebeeingangswelle antreibt. Die Ausgangswelle des Getriebes ist mit der Kettennuß des Elektrokettenzuges drehfest gekuppelt.

Auf der von der Getriebeeingangswelle abliegenden Seite des Ankers befindet sich eine Konusbremse, die durch Federmittel in die Bremsstellung vorgespannt ist. Zum Lüften der Bremse ist ein Tauchanker vorgesehen, der zu dem Motoranker koaxial ist und angezogen wird, wenn der Motor in Umdrehungen versetzt wird.

Aufgrund der Anordnung wirkt die Bremse durch die Rutschkupplung hindurch und kann folglich für die Kette kein größeres Bremsmoment erzeugen, als es die Rutschkupplung maximal zuläßt. Da für gewöhnlich die Haftreibung größer ist als die gleitende Reibung, kann es geschehen, daß das Hebezeug eine am Haken hängende Last nicht mehr festhalten kann, obwohl die Bremse eingerückt ist, weil die Kupplung durchrutscht. Eine solche Situation kann auftreten, wenn beim Anheben der Last die Kupplung zunächst im Bereich der Haftreibung betrieben wird, dann aber durch eine Störung, beispielsweise ein momentanes Verhaken der Last an einem Gegenstand oder durch Longitudinalschwingungen in der Kette, die Drehmomentgrenze der Rutschkupplung überschritten wird, die daraufhin in die Gleitreibung übergeht. Selbst wenn jetzt der Anker gestoppt wird und die Haltebremse zugespannt wird, senkt sich die Last weiter ab, denn die Rutschkupplung kann aus dem Zustand der gleitenden Reibung möglicherweise nicht mehr in den Zustand der Haftreibung zurückkehren.

Es ist deswegen zweckmäßig, die Bremse in jenen Teil des Antriebsstranges des Hebezeugs zu legen, der, vom Motor aus gesehen, hinter der Rutschkupplung liegt.

Eine solche Lösung ist beispielsweise aus der nicht vorveröffentlichten DE-A-44 08 578 bekannt. Das Bremsmoment kann unabhängig von dem Rutschmoment der Rutschkupplung eingestellt werden, und das Hebezeug ist dadurch in der Lage, Lasten sicher zu halten, selbst wenn bei Grenzlastbedingungen die Rutschkupplung ins Rutschen gekommen ist.

Bei dieser Lösung muß allerdings die zeitliche Relation zwischen dem Anlaufen des Motors und dem Lüften der Bremse sehr exakt eingehalten werden. Würde beispielsweise die Bremse beim Anheben einer Last schneller geöffnet werden als der Motor anlaufen kann, würde sich zunächst die Last absenken, ehe sie vom Motor gehoben wird. Falls umgekehrt erst der Motor anläuft und dann die Bremse gelüftet wird, bringt die angezogene Bremse die Rutschkupplung zum Durchrutschen und es kann mit dem Hebezeug nur noch eine kleinere Last entsprechend dem Reibkoeffizient bei der gleitenden Reibung angehoben werden.

Die Lösung nach der DE-A-37 10 332 vermeidet dieses Problem, indem ein Verschiebeankermotor verwendet wird, der die Synchronität zwischen Motor und Bremse zwangsläufig sicherstellt. Allerdings sind solche Verschiebeankermotoren mit konischem Anker sehr aufwendig in der Herstellung.

Ausgehend hiervon ist es Aufgabe der Erfindung, ein Hebezeug zu schaffen, bei dem das Bremsmoment von dem eingestellten Rutschmoment der Rutschkupplung unabhängig ist und bei dem nicht die Gefahr besteht, daß die Bremse die Rutschkupplung zum Gleiten bringt.

Diese Aufgabe wird erfindungsgemäß durch das Hebezeug mit den Merkmalen des Anspruches 1 gelöst.

Bei der neuen Bremse wird durch die Ausbildung der drehbaren bzw. mit der Kupplung mitlaufenden Bremsglieder dafür gesorgt, daß die Eingangs- und die Ausgangsseite der Bremse jede für sich abgebremst wird. Hierdurch wird gewährleistet, daß bis zum Lüften der Bremse die Kupplung im nicht durchrutschenden Zustand gehalten wird, weil das eingestellte Reibmoment der Kupplung keinen Einfluß auf die Bremswirkung hat. Die Eingangsseite der Bremse, die mit dem Motor unmittelbar gekuppelt ist, wird ebenso gebremst wie die Ausgangsseite, was dazu führt, daß der Motor so lange angehalten bleibt, bis die Bremse gelüftet wird. Dadurch kann die zeitliche Reihenfolge für das Einschalten des Motors und das Einschalten des Bremslüftmagneten innerhalb gewisser Grenzen frei gewählt wird. Es braucht lediglich darauf geachtet zu werden, daß der Bremslüftemagnet nicht eher eingeschaltet wird als der Motor. Unter diesen Umständen läuft die Kupplung mit der am Haken hängenden Last im Zustand des Haftreibungsschlusses an, was immer reproduzierbare Verhältnsise hervorruft.

Andererseits ist das maximale Bremsmoment durch den Reibschluß in der Reibungskupplung nicht begrenzt, weil auch die Ausgangsseite der Kupplung für sich genommen abgebremst wird. Bei intakter Rutschkupplung wird von der Eingangs- zu der Ausgangsseite zusätzlich entsprechende Bremsreibkraft auf die jeweils benötigte Seite mit übetragen. Die Anordnung ist dadurch mechanisch redundant und bringt selbst dann noch ein hohes Maß an Sicherheit im Sinne eines Abbremsens der Last, wenn die Rutschkupplung verölkt sein sollte.

Eine schwimmende Lagerung weder der Kupplungsbaugruppe noch der Bremsbaugruppe ist erforderlich, wenn zwei Bremsglieder vorgesehen sind, die mit der zugehörigen Kupplungsscheibe axial verschieblich zusammenwirken. In diesem Falle sind die Bremsglieder sehr einfach als Ringe auszubilden, die auf der Außenumfangsfläche der betreffenden Kupplungsscheibe sitzen und beispielsweise über eine Profilverzahnung drehfest mit der betreffenden Kupplungsscheibe verbunden sind.

Bei einer einfacheren Lösung ist lediglich ein verschiebbares Bremsglied vorgesehen, während das andere Bremsglied von einem Teil der Kupplungsscheibe gebildet wird.

An Stelle von scheibenförmigen Bremsplatten mit planer oder kegelförmiger Reibfläche als ortsfeste Bremsplatten kann auch ein Bremsband verwendet werden, das um die Kupplungsscheiben herumliegt und an deren Umfang wirksam ist.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 einen Kettenzug in einer perspektivischen Darstellung,
Fig. 2 den Kettenzug nach Fig. 1 in einem partiellen Längsschnitt,
Fig. 3 eine Stirnansicht auf die Kupplungs- und Bremseinheit und
Fig. 4 ein anderes Ausführungsbeispiel des Ketenzugs nach Fig. 1, in einer Darstellung ähnlich Fig. 2.

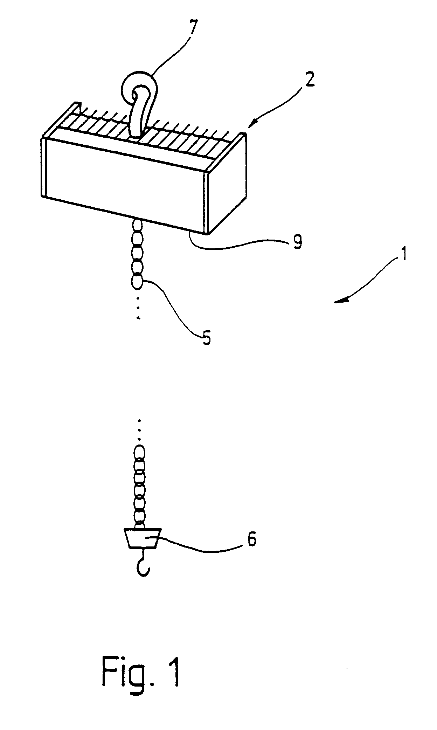

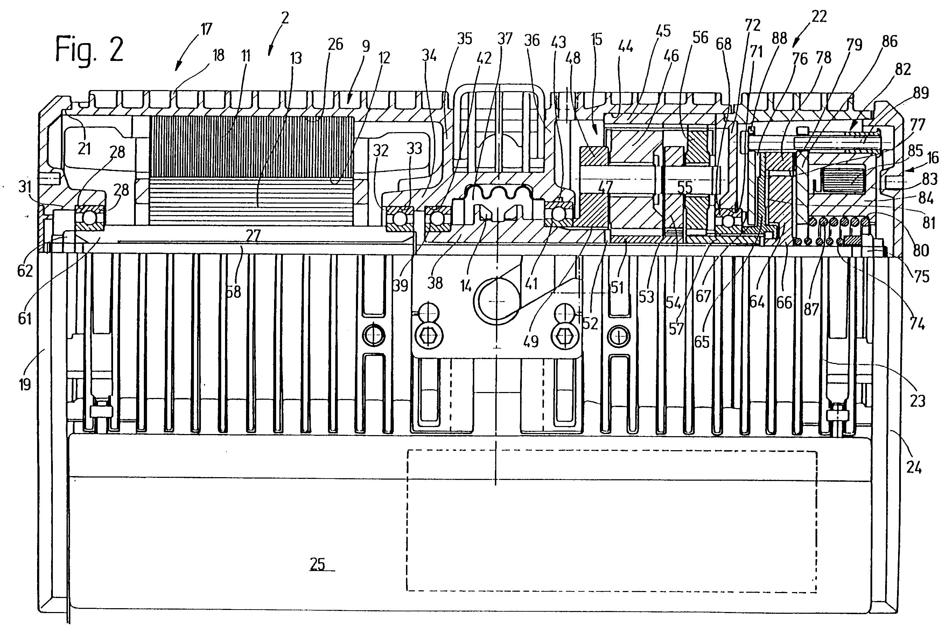

Fig. 1 zeigt stark schematisiert einen Kettenzug 1 mit einem Gehäuse 2, in dem ein Triebwerk (Fig. 2) angeordnet ist. An einer Unterseite tritt eine Rundgliederkette 5 aus, an deren unterem Ende ein Hakengeschirr 6 angebracht ist. Die Befestigung des Kettenzuges 1 geschieht mittels eines Hakens 7 an einer nicht gezeigten ortsfesten Struktur.

Wie der Schnitt nach Fig. 2 erkennen läßt, umfaßt das Triebwerk einen Asynchronmotor 9 mit einer Feldwicklung 11, in deren zylindrischer Bohrung 12 ein zylindrischer Käfigläufer 13 läuft. Ferner gehört zu dem Triebwerk eine lediglich im Schnitt erkennbare Kettennuß 14, auf deren von dem Motor 9 abliegenden Seite ein zweistufiges Planetengetriebe 15 angeordnet ist. Neben dem zweistufigen Planetengetriebe 15 befindet sich eine kombinierte Kupplungs- und Bremseinrichtung 16, die im Antriebsstrang zwischen dem Motor 9 und der Kettennuß 14 liegt. Durch die Kupplungseinrichtung wird der Antriebsstrang in zwei Abschnitte aufgeteilt.

Das Gehäuse 2 des Kettenzugs 1 besteht aus einem Gehäusemittelstück 17, das auf seiner Außenumfangsfläche in Umfangsrichtung verlaufende Rippen 18 trägt, die dem Gehäuse 2, in Querrichtung gesehen, eine etwa rechteckige Kontur verleihen. Wegen der Rippen 18 hat es eine über die Länge durchlaufende konstante Außengestalt, während tatsächlich jedoch der eigentliche Körper des Gehäuses im wesentlichen rohrförmig ist.

Das linke Stirnende des Mittelstücks 17 ist mittels eines Deckels 19 verschlossen, der über komplementäre Zentrierschultern 21 lagerichtig auf dem Mittelstück 17 gehalten ist. An dem rechten Stirnende schließt sich an das Mittelstück 17 ein dieselbe Außenumrißgestalt aufweisendes Bremsgehäuse 22 an, in dem die kombinierte Kupplungs- und Bremseinrichtung 16 untergebracht ist. Auch das Bremsgehäuse 22 ist mit entsprechenden Kühlrippen 23 versehen, die in Umfangsrichtung liegen.

Das von dem Mittelstück 17 abliegende Ende des Bremsgehäuses 22 ist mit einem weiteren Stirndeckel 24 verschlossen, der im wesentlichen zu dem Stirndeckel 19 spiegelbildlich ist.

Beide Stirndeckel 19 und 24 stehen zur gleichen Seite über das Gehäuse 2 seitlich über, wodurch sich eine etwa C-förmige seitliche Öffnung bildet. In dieser seitlichen Öffnung ist ein Steuergehäuse 25 untergebracht, das nicht veranschaulichte Anschlußklemmen, Schaltschütze, elektronische Steuerungen und dergl. enthält. Die seitlichen überstehenden Deckel 19, 24 schützen das Steuergehäuse 25, das üblicherweise aus einem Kunststoff besteht, und balancieren den Kettenzug 1 bezüglich seiner Längsachse. Falls das Gewicht der Deckel 19, 24 nicht ausreicht, können zusätzliche Gewichte in den Deckeln 19, 24 angebracht werden.

Ausgehend von dem Stirndeckel 19 führt in das Mittelstück 17 eine kreisförmige Bohrung 26 hinein, in der das Blechpaket des Stators 11 reibschlüssig festsitzend eingeschrumpft ist. Der Anker 13 sitzt drehfest auf einer Hohlwelle 27, die am linken Ende mit Hilfe eines Rillenkugellagers 28 gelagert ist, das in einer zylindrischen und zu der Bohrung 26 koaxialen Lagerbohrung 29 sitzt. Diese Bohrung 29 befindet sich in einem nach innen weisenden rohrförmigen Fortsatz 31 des Stirndeckels 19. Zur Lagerung des anderen Endes der Hohlwelle 27 ist ein Rillenkugellager 32 vorhanden, das mit Haftsitz in einer Lagerbohrung 33 steckt. Die Lagerbohrung 33 befindet sich in einem in die Bohrung 26 ragenden rohrförmigen Fortsatz 34, der aus einer in dem Mittelstück 17 eingeformten Trennwand 35 vorsteht.

Im Abstand zu der Trennwand 35 enthält das Mittelstück 17 eine weitere Trennwand 36, wodurch zwischen den beiden Trennwänden 35 und 36 ein Kettennußgehäuse 37 abgeteilt ist. Die darin laufende Kettennuß 14 ist einstückig mit einer Hohlwelle 38 ausgebildet, die beidseits der Kettennuß 14 in zwei Rillenkugellagern 39 und 41 drehbar gelagert ist. Die beiden Rillenkugellager 39 und 41 stecken in zugehörigen Lagerbohrungen 42 und 43. Die Lagerbohrung 42 ist koaxial zu der Lagerbohrung 33 in dem rohrförmigen Fortsatz 34 untergebracht, während die Lagerbohrung 43 in einer entsprechenden Verdickung der Trennwand 36 untergebracht ist. Der Durchmesser der Lagerbohrung 43 ist so gewählt, daß, bezogen auf Fig. 2 von rechts her sowohl das Rillenkugellager 39 als auch die Kettennuß 14 eingeführt werden können, da der Durchmesser der Lagerbohrung 43 größer ist als der maximale Durchmesser der Kettennuß 14.

Rechts von der Trennwand 36 erweitert sich der Innenraum des Gehäuses 2 und es befindet sich dort eine zu den Lagerbohrungen 42 und 43 koaxiale Bohrung 44, in die ein Hohlrad 45 eingeschrumpft ist, das für beide Stufen des zweistufigen Planetengetriebes 15 gemeinsam ist. Die der Kettennuß 14 benachbarte Stufe umfaßt drei Planetenräder 46, die auf Achsen 47 eines zugehörigen Planetenträgers 48 drehbar gelagert sind und mit dem Hohlrad 45 kämmen. Der Planetenträger 48 ist mit Hilfe einer Profilverzahnung 49 drehfest mit einem nach rechts über das Rillenkugellager 41 überstehenden Stummel der Hohlwelle 38 verbunden.

Mit Hilfe der drei Planetenräder 46 der zweiten Stufe ist deren Sonnenrad 51 schwimmend gelagert. Die Länge des Sonnenrades 51 ist größer als die Breite der Planetenräder 46, so daß es nach rechts über die Planetenräder 46 vorragt, wenn es links über eine Zwischenscheibe 52 an der benachbarten Stirnseite der Welle 38 anläuft. Der überstehende Teil des Sonnenrades 51 steckt in einer komplementär verzahnten Bohrung 53 eines Planetenträgers 54 der ersten Stufe des zweistufigen Planetengetriebes 15. Auf dessen Achsen 55 sitzen wiederum insgesamt drei Planetenräder 56, die ein zugehöriges Sonnenrad 57 schwimmend lagern, das ebenfalls nach rechts übersteht und in das Bromsgehäuse 22 ragt.

Die getriebliche Verbindung zwischen dem Motor 9 und dem Planetengetriebe 15 geschieht mit Hilfe einer Steck- oder Zwischenwelle 58, die an ihrer Außenseite durchgehend mit einer Profilverzahnung versehen ist. In dem linken Ende der Hohlwelle 27 des Ankers 13 befindet sich ein profilverzahnter Abschnitt 61, der zu der Profilverzahnung der Steckwelle 58 komplementär ist. Von hier aus führt die Steckwelle 58 durch die Hohlwelle 27, durch die Hohlwelle 38 der Kettennuß 14, von dort durch das hohle Sonnenrad 51 und durch das Sonnenrad 57 bis in die kombinierte Kupplungs- und Bremseinheit 16; in dem Sonnenrad 57 ist die Steckwelle 58 gegebenenfalls nochmals gelagert. An ihrem linken motorseitigen Ende ist die Steckwelle 58 durch eine auf ein entsprechendes Gewinde der Steckwelle 58 aufgeschraubte Mutter 62, die an der Stirnseite der Hohlwelle 27 abstützt, in Richtung nach rechts axial gesichert. Im übrigen ist die Steckwelle 58 gegenüber dem Sonnenrad 51 dem Sonnenrad 57 und der Kettennußwelle 38 frei drehbar.

Die kombinierte Kupplungs- und Bremseinheit 16 weist zwei zueinander parallele, plane und ringförmige Kupplungsscheiben 64 und 65 auf, die reibschlüssig miteinander in Eingriff stehen, wozu sie, wie dargestellt, entsprechende Reibbeläge tragen. Aus wärmetechnischen Gründen ist es zweckmäßig, diejenige der beiden Bremsscheiben 64 oder 65, die keinen Reibbelag trägt, verhältnismäßig stark auszubilden, um ihr eine große Wärmekapazität zu geben, damit die Kupplung die vorgeschrieben lange Zeit schleifen kann, ohne daß der Reibbelag beschädigt wird. An Stelle der gezeigten planen Gestalt der Kupplungscheiben 64 und 65 können sie auch konusförmige Reibflächen tragen.

Die Kupplungsscheibe 64 ist die angetriebene Scheibe, weshalb sie mit einer Nabe 66 versehen ist, die mit Hilfe einer zu der Profilverzahnung der Steckwelle 58 komplementären Profilverzahnung auf der Steckwelle axial verschieblich, jedoch mit der Steckwelle 58 drehfest gekuppelt ist. Die andere Kupplungsscheibe, die Kupplungsscheibe 65, ist die ausgangsseitige oder abtriebsseitige Kupplungsscheibe, die gegenüber der Steckwelle 58 lose drehbar ist. Auch die Kupplungsscheibe 65 ist mit einer Nabe 67 versehen, die eine Innenverzahnung entsprechend der Außenverzahnung des Sonnenrades 57 trägt. Das Sonnenrad 57 ist, wie dargestellt, in Richtung auf die Kupplungs- und Bremseinheit 16 verlängert und steckt mit diesem verlängerten Abschnitt in der Nabe 67 der Kupplungsscheibe 65. Auf diese Weise wird eine axial verschiebliche, jedoch drehfeste Verbindung zwischen der Kupplungsscheibe 65 und dem Sonnenrad 57 hergestellt.

Die Lagerung erfolgt mit Hilfe eines Kugellagers 68, das in einer Bohrung 71 einer Trennwand 72 des Bremsgehäuses 22 sitzt. Mit Hilfe dieses Rillenkugellagers 68 ist das durch das Rillenkugellager 68 hindurchreichenden Sonnenrad 51 drehbar gelagert, auf dem die Nabe 67 steckt. Die axiale Sicherung des Lagers 68 geschieht mittels eines in einer entsprechenden Ringnut sitzenden Sprengrings, der das Lager in Richtung nach links sichert. An dem Innenring des Lagers 68 liegt die Nabe 67 mit eine Stirnseite an. Eine von rechts nach links auf die Kupplungsscheibe 65 wirkende Axialkraft wird über die Nabe 67 und den Sprengring in das Gehäusemittelstück 17 eingeleitet.

Um die Vorspannung zu erzeugen, mit der die beiden Kupplungsscheiben 64 und 65 in Reibeingriff vorgespannt sind, sitzt auf einem nach rechts über die Kupplungsscheibe 64 vorstehenden Abschnitt der Steckwelle 58 eine als Druckfeder wirkende Schraubenfeder 74, die mittels einer auf ein entsprechendes Gewinde der Steckwelle 58 aufgedrehte Mutter 75 vorzuspannen ist. Gegebenenfalls liegen zwischen der Mutter 75 und der Feder 74 einerseits bzw. zwischen der Feder 74 und der Nabe 66 der Kupplungsscheibe 64 andererseits Beilagscheiben, die in der Zeichnung veranschaulicht sind, jedoch kein Bezugszeichen tragen.

Die Kupplungsscheibe 65 ist gleichzeitig Bremsscheibe, weshalb sie auf ihrer nach außen weisenden Flächen mit einem Bremsbelag 76 versehen ist.

Dieser Bremsbelag 76 befindet sich in einem Bereich der Kupplungsscheibe 65, der radial über den Außenumfang der Kupplungsscheibe 64 übersteht.

Der Außenumfang der Kupplungsscheibe 64 ist mit einer Profilverzahnung 77 versehen, auf der mit einer komplementären Profilverzahnung ein Bremsring 78 axial verschieblich, jedoch bezüglich der Kupplungsscheibe 64 unverdrehbar sitzt. Dieser Bremsring ist auf seiner von der Kupplungsscheibe 65 abliegenden Stirnseite mit einem weiteren Bremsbelag 79 versehen, während die der Kupplungsscheibe 65 zugekehrte Stirnseite einen solchen zusätzlichen Reibbelag nicht trägt.

Die Fig. 2 läßt ferner erkennen, daß die lichte innere Weite des Bremsrings 78 größer ist als der Außendurchmesser eines auf der Kupplungsscheibe 65 aufgebrachten Kupplungsbelags 81.

Die beiden Bremsbeläge 76 und 79 wirken mit einer stationären Bremseinrichtung 82 zusammen. Diese stationäre Bremseinrichtung 82 umfaßt einen in dem Bremsgehäuse 22 axial verschieblichen Elektromagneten 83 mit einem topfförmigen Eisenjoch 84 und einer darin befindlichen Magnetwicklung 85. Das Eisenjoch 83 ist in dem Bremsgehäuse 22 drehgesichert mit Hilfe von in dem Gehäuse enthaltenen Führungsnuten, in denen entsprechende Fortsätze des Eisenjochs 84 gleiten.

Das Eisenjoch 84 ist so angeordnet, daß seine offene Seite in Richtung auf die beiden Kupplungsscheiben 64 und 65 zeigt. Außerdem enthält das Eisenjoch 84 eine Durchgangsbohrung 80, durch die die Einsteckwelle 58 hindurchführt.

Vor der Öffnung des Eisenjoches 84 ist eine ringförmige Bremsplatte 86 angeordnet, die mit Hilfe einer Druckfeder 87 in Richtung auf die Kupplungsscheibe 64 zu vorgespannt ist. Diese Feder 87 in Form einer schraubenförmigen Druckfeder stützt sich an einer gegenüberliegenden rückwärtigen Schulter der Bohrung 85 ab. Eine weitere ringförmige Bremsplatte 88 befindet sich zwischen der Kupplungsscheibe 65 und der Trennwand 72. Diese Bremsscheibe 88 ist mit Hilfe mehrerer Schrauben 89 drehgesichert, jedoch axial verschieblich mit dem Joch 84 verbunden. Das Joch 84 enthält zu diesem Zweck Gewindebuchsen, in die die Schrauben 89 eingedreht sind.

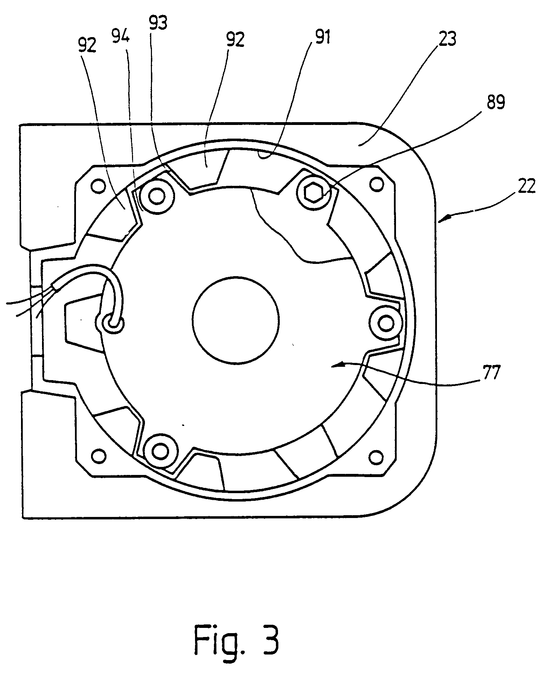

Fig. 3 zeigt schließlich eine Stirnansicht auf die Rückseite des Bremseinrichtung 82. Wie dort zu erkennen ist trägt das Bremsgehäuse 22 auf seiner Innenseite 91 eine Vielzahl von parallel zu der Achse der Steckwelle 58 verlaufenden Rippen 92, die jeweils paarweise Nuten 93 begrenzen. In diesen Nuten 93 befinden sich längsverschieblich Fortsätze 94, die an dem Magnetjoch 84, der Bremsplatte 86 und der Bremsplatte 88 vorgesehen sind. Durch Zusammenwirken dieser Fortsätze 94 mit den Nuten 93 ist die Bremseinheit 82 in dem Bremsgehäuse 22 drehgesichert und kann bei gelüfteter Bemse auch nicht in einem solchen Maße kippen, als daß ein ungleichmäßiger Verschleiß im unteren Bereich der Bremsplatten 86 und 88 zustandekommen könnte.

Die Montage des insoweit beschriebenen Kettenzugs 1 geschieht wie folgt:

An dem Gußrohling werden zunächst die Bohrungen 26, 44 sowie die Lagerbohrungen 33, 42 und 43 koaxial zueinander fertig bearbeitet, einschließlich der Schulter 21, auf der später der Lagerdeckel 19 sitzt. Sodann werden der Stator 11 und das Hohlrad 45 in die zugehörigen Bohrungen 26 bzw. 44 des Mittelstücks 17 eingeschrumpft.

Nachdem dies geschehen ist, werden das Lager 32 und sodann der Anker 13 mit seiner Hohlwelle 27 eingesetzt. Daraufhin wird der Lagerdeckel 19 mit dem darin sitzenden Lager 29 auf dem Gehäusemittelstück 17 befestigt.

Als nächstes erfolgt das Einsetzen der Kettennuß 14, die, wie oben erwähnt, mit ihrer zugehörigen Welle 38 einstückig ist, und der Lager 39 und 41. Anschließend wird das Planetengetriebe 15 eingebaut und das Bremsgehäuse 22 aufgesetzt. Sodann kann die vorbereitete kombinierte Kupplungs- und Bremseinheit 16 in dem Bremsgehäuse 22 befestigt werden.

Parallel zu der vorstehend beschriebenen Montage erfolgt der Zusammenbau der kombinierten Kupplungs- und Bremseinheit 16. Dies geschieht, indem nach dem Einsetzen der Druckfeder 87 auf das Magnetjoch 84 die Bremsplatte 86, die Kupplungsscheibe 64 mit dem darauf sitzenden Bremsring 78, die Kupplungsscheibe 65 und schließlich die Bremsplatte 88 mit der dargestellten Orientierung aufgelegt werden. Sodann werden werden die Schrauben 89 in das Magnetjoch 84 eingedreht. Das Eindrehen der Schrauben 89 geschieht solange, bis zwischen der betreffenden Stirnseite des Magnetjochs 84 und der unmittelbar benachbarten Bremsplatte 86 der gewünschte Luftspalt erreicht ist, der später bei gelüfteter Bremse den Lüftespalt definiert. Die so vorbereitete Kupplungs- und Bremseinheit 16 wird mit der Nabe 68 auf den aus dem Kugellager 69 vorstehenden Stummel des Sonnenrads 57 gesteckt.

Die Steckwelle 58 von der Motorseite her eingeführt, bis sie die in der Fig. 2 gezeigte Lage einnimmt. Auf den in der Bohrung 85 des Magnetjochs 84 befindlichen Abschnitt wird die Druckfeder 74 aufgesteckt und mit Hilfe der aufgeschraubten Mutter 75 entsprechend vorgespannt.

Als letztes kann der Stirndeckel 24 aufgesetzt werden, womit der mechanische Zusammenbau insoweit erledigt ist.

Die Funktionsweise des beschriebenen Kettenzugs, insbesondere der kombinierten Brems- und Kupplungseinheit 16, ist wie folgt:

Der Kraftfluß, der zum Vorspannen der beiden Kupplungsscheiben 64 und 65 in Reibeingriff miteinander dient, geht, ausgehend von der Druckfeder 74 zu der Mutter 75, die die Kraft in die Steckwelle 58 einleitet. Die Steckwelle 58 stützt sich über die Mutter 62 an der Hohlwelle 27 des Motors 9 ab. Die so auf die Hohlwelle 27 wirkende Axialkraft wird über das Rillenkugellager 32 in das Gehäusemittelstück 17 eingeleitet, das die Kraft auf die Trennwand 72 des Bremsgehäuses 22 überträgt. An der Trennwand 72 liegt mit dem Sprengring das Kugellager 69 an, an das die Nabe 68 anstößt. Der Kraftfluß schließt sich von der Nabe 68 über die Kupplungsscheibe 65 zu der Kupplungsscheibe 64 und von dort über deren Nabe 66 zu der Druckfeder 74. Somit wird mit Hilfe der Druckfeder 87 die Kraft erzeugt, mit der die beiden Kupplungsscheiben 64 und 65 reibschlüssig in Eingriff stehen.

Die Vorspannkaft zwischen den Kupplungsscheiben 64 und 65 wird nicht durch die Bremseinrichtung 82 beeinflußt.

Bei zugespannter Bremseinrichtung 82 werden die beiden Bremsplatten 88 und 86 über die Druckfeder 87 zusammengepreßt. Der Kraftfluß geht hierbei von der Druckfeder 87 über die Bremsplatte 86, von dort auf den Bremsbelag 79 zu dem axial verschieblichen Bremsring 78 und somit an der Kupplungsscheibe 64 vorbei. Der Bremsring 78 wird aufgrund der Vorspannkraft gegen die betreffende benachbarte plane Stirnseite einer an der Kupplungsscheibe 65 einstückig ausgebildeten Ringfläche übertragen. Von hier geht die Kraft durch die Kupplungsscheibe 65 zu dem Bremsbelag 76 und von dort zu der drehfesten Bremsplatte 88. Letztere ist über die Schraube 89 mit dem Magnetjoch 84 verbunden, womit sich der Kraftfluß zu der Druckfeder 87 schließt.

Wie sich aus der Wirkung des Kraftflusses ergibt, verändert die Druckfeder 87 nicht die in der Rutschkupplung, gebildet durch die Kupplungsscheiben 64 und 65 sowie den Reibbelag 81, vorhandenen Reibschluß. Der Reißbschluß an der besagten Stelle wird ausschließlich von der Vorspannkraft der Druckfeder 74 definiert. Auch im zugespannten Zustand ist der Abstand zwischen den Bremsplatten 86 und 88 größer als es der axialen Dicke der Kupplngsscheiben 64 und 65 entspricht, so daß die beiden Bremsplatten 86 und 88 nicht gleichzeitig an den Kupplungsscheiben 64 und 65 anliegen.

Die Vorspannkraft, die durch die Druckfeder 87 ausgeübt wird, wird gleichsam an der Rutschkupplung vorbeigeleitet.

Im zugespannten Zustand der Bremseinrichtung 82 wird einerseits die Kupplungsscheibe 64 unmittelbar gegen die drehfeste Bremsplatte 86 abgebremst, weil der Bremsring 78 drehfest und axial verschieblich mit der Kupplungsscheibe 64 verbunden ist. Somit erfolgt eine unmittelbare Abbremsung jenes Teils des Getriebestrangs, der den Motor 9 mit der Kettennuß 14 verbindet, der dem Motor 9 benachbart ist.

Die Kupplungsscheibe 65, die antriebsmäßig der Kettennuß 14 zugeordnet ist, wird unabhängig und eigenständig mittels der drehfesten Bremsplatte 88 abgebremst, denn sie trägt auf ihrer dieser Bremsplatte 88 benachbarten Fläche den ringförmigen Bremsbelag 76.

Sowohl das Eingangsglied als auch das Ausgangsglied der Rutschkupplung wird bei dieser Ausführungsform für sich gebremst.

Wenn bei dieser Anordnung zunächst der Strom für den Motor 9 eingeschaltet wird und erst verzögert der Elektromagnet 83 der Bremseinrichtung 82, dann bleibt unabhängig vom Reibschluß zwischen den Kupplungsscheiben 64 und 65 der Anker 13 blockiert. Hierfür sorgt der Reibschluß zwischen der Bremsplatte 86 und dem Bremsring 78, der drehfest mit dem Anker 13 über die Kupplungsscheibe 64 gekuppelt ist. Erst, wenn kurze Zeit später der Elektromagnet 84 eingeschaltet wird, und die Bremsplatte 86 an das Magnetjoch 84 herangezogen wird, fällt die Bremskraft weg und der Motor 9 vermag die Steckwelle 58 in Umdrehungen zu versehen. Wenn die an dere nicht gezeigten Kette hängende Last geringer als die zulässige Grenzlast ist, wird sich über das Planetengetriebe 15 auch die Kettennuß 14 in Bewegung setzen. Ist hingegen die angehängte Hakenlast zu groß, rutscht die aus den beiden Kupplungsscheiben 64 und 65 gebildete Rutschkupplung durch, wobei das Rutschmoment ausschließlich durch die Vorspannung der Druckfeder 74 festgelegt ist.

Wesentlich dabei ist, daß in jedem Falle aufgrund der getroffenen Anordnung bis zum Lüften der Bremse, also dem Einschalten des Elektromagneten 83, die Rutschkupplung sich im Zustand der Haftreibung befunden hat. Auch wenn der Elektromagnet 83 erst eingeschaltet wird, nachdem der Motor 9 eingeschaltet ist, kommt die Rutschkupplung keineswegs vorher in den Zustand der Gleitreibung. Unabhängig von den zeitlichen Relationen werden damit exakt reproduzierbare Verhältnisse des Reibeingriffs zwischen den beiden Kupplungsscheiben 64 und 65 hergestellt, die insbesondere unabhängig davon sind, mit welcher Verzögerung der Magnet 83 gegenüber dem Motor 9 eingeschaltet wird und ob beide gleichzeitig aktiviert werden.

Andererseits hat die neue Lösung den wesentlichen Vorteil, daß das Bremsmoment, mit dem die Kettennuß 14 abgebremst werden kann, nicht von dem Rutschmoment der Sicherheitskupplung abhängig ist.

Würde an dem Haken eine zu große Last hängen, die ein größeres Drehmoment zwischen den beiden Kupplungsscheiben 64 und 65 erzeugen würde, als es dem Überwinden der Haftreibung zwischen diesen beiden Kupplungsscheiben 64 und 65 bei gelüfteter Bremse entsprechen würde, wäre die Last jederzeit wieder zum Halten zu bringen. Es genügt, wenn die Bedienperson den Kettenzug 1 abschaltet, weil sodann umgehend der Elektromagnet 83 entregt wird, was dazu führt, daß die Druckfeder 87 wiederum wirksam wird und die Kupplungsscheiben 65 an der drehfesten Bremsplatte 88 festbremst, unabhängig von dem über die Druckfeder 74 eingestellten Rutschmoment.

Eine zusätzliche Sicherheit wird bei der gezeigten Lösung dadurch erhalten, daß sowohl die eingangsseitige als auch die ausgangsseitige Kupplungsscheibe 64, 65 jeweils ein eigener Bremsbelag 76, 79 versehen ist, so daß selbst dann ein sicheres Bremsen gewährleistet ist, wenn die Rutschkupplung selbst ihren Dienst versagen würde. Da beide Kupplungsscheiben 64 und 65 mit einem eigenen Reibbremsbelag 76, 79 versehen sind, wird durch die zugeordneten Bremsplatten 86 und 88 jede Kupplungsscheibe 64, 65 für sich abgebremst, d.h. es wird sowohl die Motorseite als auch, was noch wichtiger ist, die Abtriebsseite und damit die Kettennußseite festgebremst.

Würde hingegen der ausgangsseitige Bremsbelag 76 der Kupplungsscheibe 75 versagen, während die Kupplung selbst in Ordnung ist, würde dennoch ein zuverlässiges Bremsen stattfinden, denn dann geschieht die Bremswirkung über die Kupplungsscheibe 64 und die Haftreibung zwischen den Kupplungscheiben 64 und 65.

Die schwimmende Lagerung der Bremseinheit 78 soll gewährleisten, daß beide Bremsplatten 86 und 88 in gleicher Weise zuspannen können und keine Biegekräfte an der Kupplungsscheibe 65 auftreten.

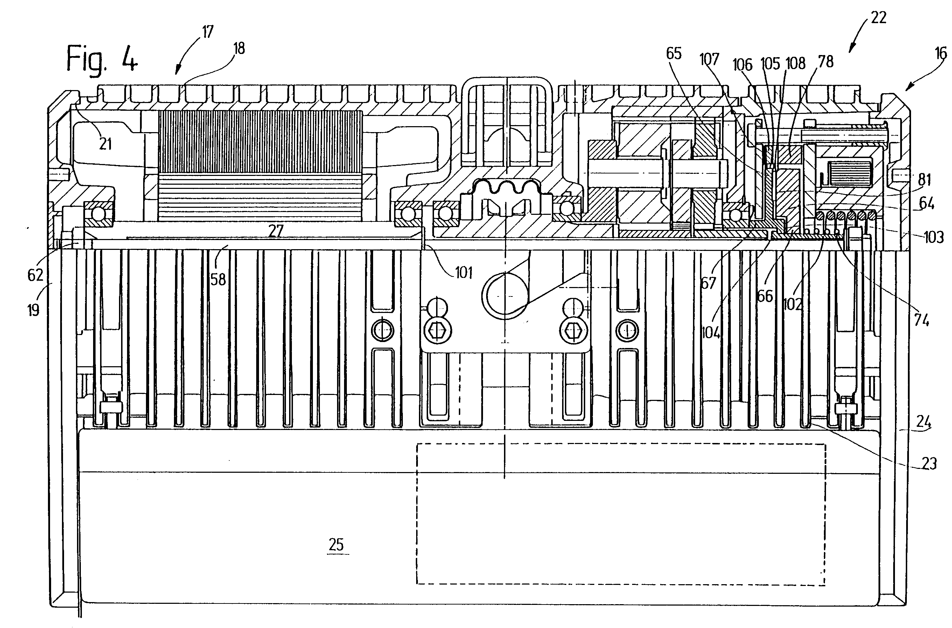

Fig. 4 zeigt ein Ausführungsbeispiel der kombinierten Kupplungs- und Bremseinheit 16, bei der der Bremsmagnet 84 in dem Bremsgehäuse 22 starr festgeschraubt werden kann. Nachstehend sind lediglich diejenigen Teile der Kupplungs- und Bremseinheit 16 beschreiben, in denen sie sich von dem Ausführungsbeispiel nach Fig. 2 unterscheiden.

Die Steckwelle 58 ist im Bereich des innenliegenden stirnseitigen Endes der Hohlwelle 27 mit einer Nut versehen, in der ein Sprengring 101 sitzt. Durch ein Anziehen der Mutter 62 wird die Steckwelle 58 in der Hohlwelle 27 verspannt und in beiden Richtungen axial gesichert. Die Steckwelle 58 reicht nur zum Teil in die Bremseinheit 82 hinein. Sie endet etwa unterhalb der Kupplungsscheibe 64 innerhalb einer mit einer entsprechenden Profilverzahnung versehenen Hohlschraube 102, auf deren Außenumfangsfläche die Druckfeder 74 angeordnet ist. Die Hohlschraube 102 ist mit einer weiteren außenliegenden Profilverzahnung versehen, auf der längsverschieblich die Kupplungsscheibe 64 mit ihrer Nabe 66 drehfest angeordnet ist.

Die Nabe 67 der Kupplungsscheibe 65 ist mit einer radial nach innen vorspringenden Schulter 103 versehen, an der ein radial nach außen zeigender Bund 104 der Hohlschraube 102 anliegt. Auf diese Weise werden die beiden Kupplungsscheiben 64 und 65 mittels der Feder 84 auf der Hohlschraube 102 unmittelbar elastisch vorgespannt, so daß zwischen diesen beiden Kupplungsscheiben 64 und 65 ein Reibschluß über den Kupplungsbelag 81 hergestellt ist, der beispielsweise an der Kupplungsscheibe 64 befestigt ist.

Aufgrund der Anordnung der Kupplungsscheiben 64 und 65 auf der Hohlschraube 102 entsteht eine selbständige Baugruppe und es ist möglich bei dieser Baugruppe das Reibmoment zwischen den Kupplungscheiben 64 und 65 vor der Montage des gesamten Kettenzugs 1 voreinzustellen.

Ansonsten ist die Kupplungsscheibe 64 in der gleichen Weise ausgeführt wie bei dem Ausführungsbeispiel nach Fig. 2, d.h. sie trägt den bereits beschriebenen äußeren Bremsring 78.

Gegenüber dem vorerwähnten Ausführungsbeispiel ist die Kupplungsscheibe 65 dahingehend modifiziert, daß sie an dem Außenumfang ebenfalls mit einer Profilverzahnung 105 versehen ist, auf der drehfest und axial verschieblich ein zweiter Bremsring 106 angeordnet ist, der auf beiden Stirnseiten jeweils einen Reibbremsbelag 107 bzw. 108 trägt.

Die Wirkungsweise der Bremseinheit 82 ist wie folgt:

Bei zugespannter Bremseinheit 82 werden von der Druckfeder 87 die beiden Bremsplatten 86 und 88 zangenartig zusammengespannt, wobei sie die beiden Bremsringe 78 und 106 zwischen sich zusammenpressen. Im zugespannten Zustand ist der Abstand zwischen den Bremsplatten 86 und 88 so groß, daß keine Axialkraft von den Bremsplatten 86 und 88 unmittelbar auf die beiden Kupplungsscheiben 64 und 65 ausgeübt wird. Der Reibschluß zwischen den beiden Kupplungsscheiben bleibt somit unbeeinflußt. Ferner ist wiederum, wie bei dem vorherigen Ausführungsbeispiel, jede der beiden Kupplungsscheiben 64 und 65 für sich über den an ihrem Außenumfang drehfest angeordneten Ring 78 bzw. 106 an der zugehörigen Bremsplatte 86 bzw. 88 abgebremst.

Der zwischen den beiden Bremsringen vorhandene Reibbelag 108 dient der Erhöhung der Sicherheit, d.h. er bildet eine Art mechanische Redundanz für den Fall, daß der Kupplungsreibbelag 81 versagt. Falls diese Situation auftritt, würde bei einer Überlast am Haken die den Eingang der Rutschkupplung abbremsende Bremsplatte 86 praktisch wirkungslos werden, weil die Reibkupplung, gebildet von den Kupplungsscheiben 64 und 65, kein Moment mehr übertragen kann. Um in diesem Falle die ausgangsseitige Bremsplatte 88 dennoch hinsichtlich ihrer Wirkung durch die eingangsseitig wirkende Bremsplatte 86 unterstützen zu können, ist auch zwischen den beiden Bremsringen 78 und 106 der Reibbremsbelag 108 vorgesehen, der dazu führt, daß die beiden Bremsringe 78 und 106 nennenswert reibschlüssig miteinander gekuppelt werden. Entsprechend dem zwischen den Bremsringen 78 und 106 auftretenden Reibschluß kann die Bremswirkung zwischen dem Bremsring 78 und der drehfesten Bremsplatte 86 mit zu der Ausgangsseite bezogen auf den Leistungsfluß übertragen werden.

Der wesentliche Vorteil der Anordung nach Fig. 4 besteht darin, daß eine schwimmende Lagerung der Bremseinheit 82 nicht mehr nötig ist, denn die beiden Bremsringe 78 und 106 können sich gegen den zugehörigen Kupplungsscheiben 64 und 65 in axialer Richtung freischwimmend verstellen.

Außerdem besteht ein Vorteil dieser Lösung darin, daß die Bremsbeläge 76 und 79 mit einem größeren wirksamen Radius arbeiten als der Kupplungsreibbelag 81.

## Patentansprüche

1. Hebezeug (1)
mit einem Antriebsmotor (9),
mit einem mit dem Antriebsmotor (9) gekuppelten Getriebe (15), das zumindest eine Eingangs- (57) und eine Ausgangswelle (38), die mit einer Lastmittelhubeinrichtung (14) verbunden ist, aufweist und das mit dem Antriebsmotor (9) und der Lastmittelhubeinrichtung (14) einen Antriebsstrang bildet,
mit einer auf dem Antriebsstrang wirkenden Bremseinrichtung (82), die wenigstens ein drehfestes Bremsglied (86,88) sowie wenigstens zwei mit dem Antriebsstrang umlaufendes Bremsglieder (78,65,106) aufweist, wobei durch eine wahlweise lüftbare Bremsvorspanneinrichtung (84,87) die wenigstens zwei drehbaren Bremsglieder (78,65,106) und das wenigstens eine drehfeste Bremsglied (86,88) wahlweise in Reibeingriff miteinander vorspannbar sind,
mit einer den Antriebsstrang in zwei Abschnitte aufteilenden Rutschkupplung (64,65), die wenigstens ein angetriebenes Kupplungsglied (64) sowie wenigstens ein treibendes Kupplungsglied (65) aufweist, die beide durch eine Kupplungsvorspanneinrichtung (74) in Reibeingriff miteinander vorgespannt sind,
wobei eines der wenigstens zwei umlaugfenden Bremsglieder (78,65,106) mit dem angetriebenen Kupplungsglied (64) und das andere der wenigstens zwei umlaugfenden Bremsglieder (78,65,106) mit dem treibenden Kupplungsglied (65) drehfest verbunden ist.

2. Hebezeug nach Anspruch 1, dadurch gekennzeichnet, daß zwei drehfeste Bremsglieder (86,88) vorgesehen sind, von denen jedes einem drehbaren Bremsglied (78,65,106) zugeordnet ist.

3. Hebezeug nach Anspruch 1, dadurch gekennzeichnet, daß die wenigstens zwei drehbaren Bremsglieder (78,65,106) derart einander benachbart sind, daß sie bei zugespannter Bremseinrichtung (82) miteinander in Reibeingriff stehen.

4. Hebezeug nach Anspruch 1, dadurch gekennzeichnet, daß wenigstens eines der drehbaren Bremsglieder (78,65,106) von einem Ring (78,106) gebildet ist, der das zugehörige Kupplungsglied (64,65) koaxial umgibt.

5. Hebezeug nach Anspruch 4, dadurch gekennzeichnet, daß der Ring (78,106) gegenüber dem zugehörigen Kupplungglied (64,65) axial verschiebbar ist.

6. Hebezeug nach Anspruch 1, dadurch gekennzeichnet, daß wenigstens zwei ringförmige Bremsglieder (78,106) vorhanden sind, von denen jedes das zugehörigen Kupplungsglied (64,65) koaxial umgibt und die gegenüber dem zugehörigen Kupplungsglied (64,65) axial verschiebbar sind.

7. Hebezeug nach Anspruch 1, dadurch gekennzeichnet, daß eines (65) der wenigstens zwei drehbaren Bremsglieder (78,65) und das zugehörige Kupplungsglied (65) miteinander einstückig sind.

8. Hebezeug nach Anspruch 1, dadurch gekennzeichnet, daß die ortsfesten Bremsglieder (86,88) planscheiben- oder kegelstumpfförmig sind.

9. Hebezeug nach Anspruch 1, dadurch gekennzeichnet, daß das ortsfeste Bremsglied ein Bremsband ist.

10. Hebezeug nach Anspruch 1, dadurch gekennzeichnet, daß die Kupplungseinrichtung (64,65) zwischen den beiden drehfesten Bremsgliedern (86,88) angeordnet ist.

11. Hebezeug nach Anspruch 1, dadurch gekennzeichnet, daß das drehfeste Bremsglied oder die drehfesten Bremsglieder (86,88) plane Bremsflächen tragen.

12. Hebezeug nach Anspruch 1, dadurch gekennzeichnet, daß die wenigstens zwei Kupplungsglieder (64,65) scheibenförmig sind.

13. Hebezeug nach Anspruch 1, dadurch gekennzeichnet, daß das wenigstens eine ortsfeste Bremsglied (86,88) und das wenigstens eine drehbare Bremsglied (78,65,106) durch Federmittel (87) in Reibeingriff aufeinander zu vorgespannt sind.

14. Hebezeug nach Anspruch 1, dadurch gekennzeichnet, daß der Bremseinrichtung (82) eine Bremslüfteeinrichtung (84) zugeordnet ist, die entgegen den Federmitteln (87) wirkt.

15. Hebezeug nach Anspruch 1, dadurch gekennzeichnet, daß der Antriebsmotor (9) über die Kupplungseinrichtung (64, 65) auf eine Eingangswelle (57) des Getriebes (15) wirkt.

16. Hebezeug nach Anspruch 1, dadurch gekennzeichnet, daß die drehfest angeordneten Bremsglieder (86,88) in Richtung parallel zu einer Drehachse der Kupplungseinrichtung (64, 65) schwimmend gelagert sind.

17. Hebezeug nach Anspruch 16, dadurch gekennzeichnet, daß die drehfest angeordneten Bremsglieder (86,88) in Richtung parallel zu einer Drehachse der Kupplungseinrichtung (64,65) derart geführt sind, daß sie im gelüfteten Zustand der Bremseinrichtung (77) verkippen können.

18. Hebezeug nach Anspruch 1, dadurch gekennzeichnet, daß die Kupplungsglieder (64,65) durch Federmittel (74) in Reibeingriff miteinander vorgespannt sind.

19. Hebezeug nach Anspruch 1, dadurch gekennzeichnet, daß die Lüfteeinrichtung (84) einen Elektromagneten aufweist.

## Claims

1. Lifting tackle (1)
with a drive motor (9),
with a gear unit (15) which is coupled to the drive motor (9) and has at least one input shaft (57) and one output shaft (38) connected to a load lifting means (14) and which forms a driving line with the drive motor (9) and the load lifting means (14),
with a brake arrangement (82) which acts on the driving line and has at least one non-rotatable brake member (86, 88) as well as at least two brake members (78, 65, 106) which rotate with the driving line, wherein by means of a brake pretensioning arrangement (84, 87) which can be eased as required the at least two rotatable brake members (78, 65, 106) and the at least one non-rotatable brake member (86, 88) can be pretensioned in frictional engagement with one another as required,
with a slip clutch (64, 65) which divides the driving line into two sections and has at least one driven clutch member (64) as well as at least one driving clutch member (65) which are both pretensioned in frictional engagement with one another by a clutch pretensioning arrangement (74),
wherein one of the at least two rotating brake members (78, 65, 106) is non-rotatably connected to the driven clutch member (64) and the other of the at least two rotating brake members (78, 65, 106) is non-rotatably connected to the driving clutch member (65).

2. Lifting tackle as claimed in Claim 1, characterised in that two non-rotatable brake members (86, 88) are provided, each of which is associated with a rotatable brake member (78, 65, 106).

3. Lifting tackle as claimed in Claim 1, characterised in that the at least two rotatable brake members (78, 65, 106) are adjacent to one another in such a way that they are in frictional engagement with one another when the brake arrangement (82) is clamped.

4. Lifting tackle as claimed in Claim 1, characterised in that at least one of the rotatable brake members (78, 65, 106) is formed by a ring (78, 106) which coaxially surrounds the appertaining clutch member (64, 65).

5. Lifting tackle as claimed in Claim 4, characterised in that the ring (78, 106) is axially movable relative to the appertaining clutch member (64, 65).

6. Lifting tackle as claimed in Claim 1, characterised in that at least two ring-shaped brake members (78, 106) are provided, each of which coaxially surrounds the appertaining clutch member (64, 65), these brake members being axially movable relative to the appertaining clutch member (64, 65).

7. Lifting tackle as claimed in Claim 1, characterised in that one (65) of the at least two brake members (78, 65) and the appertaining clutch member (65) are constructed in one piece with one another.

8. Lifting tackle as claimed in Claim 1, characterised in that the stationary brake members (86, 88) are in the form of a planar disc or a truncated cone.

9. Lifting tackle as claimed in Claim 1, characterised in that the stationary brake member is a brake band.

10. Lifting tackle as claimed in Claim 1, characterised in that the clutch arrangement (64, 65) is disposed between the two non-rotatable brake members (86, 88).

11. Lifting tackle as claimed in Claim 1, characterised in that the non-rotatable brake member or the non-rotatable brake members (86, 88) have planar brake surfaces.

12. Lifting tackle as claimed in Claim 1, characterised in that the at least two clutch members (64, 65) are in the form of discs.

13. Lifting tackle as claimed in Claim 1, characterised in that the at least one stationary brake member (86, 88) and the at least one rotatable brake member (78, 65, 106) are pretensioned towards one another in frictional engagement by spring means (87).

14. Lifting tackle as claimed in Claim 1, characterised in that the a brake easing arrangement (84) which acts against the spring means (87) is associated with the brake arrangement (82).

15. Lifting tackle as claimed in Claim 1, characterised in that the drive motor (9) acts via the clutch arrangement (64, 65) on an input shaft (57) of the gear unit (15).

16. Lifting tackle as claimed in Claim 1, characterised in that the non-rotatable brake members (86, 88) are mounted floating in a direction parallel to an axis of rotation of the clutch arrangement (64, 65).

17. Lifting tackle as claimed in Claim 16, characterised in that the non-rotatable brake members (86, 88) are guided in a direction parallel to an axis of rotation of the clutch arrangement (64, 65) in such a way that they can tilt in the eased state of the brake arrangement (77).

18. Lifting tackle as claimed in Claim 1, characterised in that the clutch members (64, 65) are pretensioned in frictional engagement with one another by spring means (74).

19. Lifting tackle as claimed in Claim 1, characterised in that the easing arrangement (84) has an electromagnet.

## Revendications

1. Palan (1) comprenant
un moteur d'entraînement (9),
un réducteur (15) couplé au moteur d'entraînement (9), lequel réducteur comporte au moins un arbre d'entrée (57) et un arbre de sortie (38) qui est relié à un dispositif de levage de charge (14) et forme une ligne d'entraînement avec le moteur d'entraînement (9) et le dispositif de levage de charge (14),
un dispositif de freinage (82) qui agit sur la ligne d'entraînement et comporte au moins un élément de frein fixe en rotation (86, 88) ainsi qu'au moins deux éléments de frein (78, 65, 106) qui tournent avec la ligne d'entraînement, les éléments de frein tournants (78, 65, 106), au nombre d'au moins deux, et l'élément de frein (86, 88) fixe en rotation, au nombre d'au moins un, pouvant être amenés mutuellement en prise par friction, de manière sélective, à l'aide d'un dispositif de serrage de frein (84, 87) desserrable de manière sélective,
un accouplement à friction (64, 65) qui divise la ligne d'entraînement en deux tronçons et comporte au moins un élément d'accouplement (64) mene et au moins un élément d'accouplement (65) menant qui sont amenés mutuellement en prise par friction par un dispositif de serrage d'accouplement (74),
au moins un des éléments de freins tournants (78, 65, 106) au nombre d'au moins deux étant solidaire en rotation de l'élément d'accouplement mené (64) et l'autre des éléments de freins tournants (78, 65, 106), au nombre d'au moins deux, étant solidaire en rotation de l'élément d'accouplement menant (65).

2. Palan selon la revendication 1, caractérisé par le fait qu'il est prévu deux éléments de frein (86, 88) fixes en rotation, qui sont associés chacun à un élément de frein tournants (78, 65, 106).

3. Palan selon la revendication 1, caractérisé par le fait que les éléments de frein tournants (78, 65, 106), au nombre d'au moins deux, sont voisins l'un de l'autre, de telle sorte qu'ils soient en prise mutuelle par friction, lorsque le dispositif de freinage (82) est serré.

4. Palan selon la revendication 1, caractérisé par le fait que l'un au moins des éléments de frein tournants (78, 65, 106) est formé par une couronne (78, 106) annulaire qui entoure l'élément d'accouplement (64, 65) concerné et est coaxial vace celui-ci.

5. Palan selon la revendication 4, caractérisé par le fait que la couronne (78, 106) peut coulisser axialement par rapport à l'élément d'accouplement (64, 65) concerné.

6. Palan selon la revendication 1, caractérisé par le fait qu'il est prévu au moins deux éléments de frein (78, 106) annulaires qui entourent chacun l'élément d'accouplement concerné (64, 65) et sont coaxiaux avec celui-ci et qui peuvent coulisser axialement par rapport à l'élément d'accouplement (64, 65) concerné.

7. Palan selon la revendication 1, caractérisé par le fait que l'un (65) des éléments de frein (78, 65) tournants au nombre d'au moins deux et l'élément d'accouplement concerné (65) forment un ensemble monobloc.

8. Palan selon la revendication 1, caractérisé par le fait que les éléments de frein (86, 88) fixes on la forme de disques plans ou de troncs de cônes.

9. Palan selon la revendication 1, caractérisé par le fait que l'élément de frein fixe est une bande de frein.

10. Palan selon la revendication 1, caractérisé par le fait que le dispositif d'accouplement (64, 65) est disposé entre les deux éléments de frein (86, 88) fixes en rotation.

11. Palan selon la revendication 1, caractérisé par le fait que l'élément de frein fixe en rotation ou les éléments de frein (86, 88) fixes en rotation portent des surfaces de freinage planes.

12. Palan selon la revendication 1, caractérisé par le fait que les éléments d'accouplement (64, 65) au nombre d'au moins deux ont une forme de disque.

13. Palan selon la revendication 1, caractérisé par le fait que l'élément de frein (86, 88) fixe en rotation, au nombre d'au moins un, et l'élément de frein (78, 65, 106) tournant, au nombre d'au moins un, sont précontraints en direction l'un de l'autre, en prise par friction, par des moyens élastiques (87).

14. Palan selon la revendication 1, caractérisé par le fait qu'un dispositif de desserrage de frein (84) qui agit à l'encontre des moyens élastiques (87) est associé au dispositif de freinage.

15. Palan selon la revendication 1, caractérisé par le fait que le moteur d'entraînement (9) agit sur un arbre d'entrée (57) du réducteur (15) par l'intermédiaire du dispositif d'accouplement (64, 65).

16. Palan selon la revendication 1, caractérisé par le fait que les éléments de frein (86, 88) fixes en rotation sont montés oscillants dans la direction parallèle à un axe de rotation du dispositif d'accouplement (64, 65).

17. Palan selon la revendication 16, caractérisé par le fait que les éléments de frein (86, 88) fixes en rotation, dans la direction parallèle à un axe de rotation du dispositif d'accouplement (64, 65) sont guidés de telle sorte qu'ils puissent basculer lorsque le dispositif de freinage (77) est desserré.

18. Palan selon la revendication 1, caractérisé par le fait que les éléments d'accouplement (64, 65) sont précontraints en prise mutuelle par friction par des moyens élastiques (74).

19. Palan selon la revendication 1, caractérisé par le fait que le dispositif de desserrage (84) comporte un électro-aimant.
